(19) Europäisches Patentamt / European Patent Office / Office européen des brevets

(11) **EP 4 293 158 B1**

(12) **EUROPEAN PATENT SPECIFICATION**

(45) Date of publication and mention of the grant of the patent:
**18.02.2026 Bulletin 2026/08**

(21) Application number: **22713444.2**

(22) Date of filing: **11.02.2022**

(51) International Patent Classification (IPC):
**D21H 11/04** (2006.01)   **C08L 97/02** (2006.01)
**C08L 1/02** (2006.01)   **C08L 67/04** (2006.01)

(52) Cooperative Patent Classification (CPC):
(C-Sets available)
**C08L 97/02; C08L 1/02; C08L 67/04; D21H 11/04; D21H 13/24** (Cont.)

(86) International application number:
**PCT/IB2022/051246**

(87) International publication number:
**WO 2022/172218 (18.08.2022 Gazette 2022/33)**

(54) **MICRONIZED BLEACHED EUCALYPTUS KRAFT PULP FIBRE BIOCOMPOSITE**

MIKRONISIERT GEBLEICHTER BIOVERBUNDSTOFF AUS EUKALYPTUSKRAFTZELLSTOFFFASERN

BIOCOMPOSITE DE FIBRES MICRONISÉES DE PÂTE KRAFT D'EUCALYPTUS BLANCHIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2021 PT 2021117064**

(43) Date of publication of application:
**20.12.2023 Bulletin 2023/51**

(73) Proprietors:
• **RAIZ - Instituto De Investigação Da Floresta E Papel**
3800-783 Eixo (PT)
• **Universidade de Aveiro**
3810-193 Aveiro (PT)

(72) Inventors:
• **AFONSO VALENTE, Bruno Filipe**
3810-193 Aveiro (PT)
• **DOMINGUES SILVESTRE, Armando Jorge**
3810-193 Aveiro (PT)
• **CUNHA VILELA, Carla Andreia**
3810-193 Aveiro (PT)
• **DA ROCHA FREIRE BARROS, Carmen Sofia**
3810-193 Aveiro (PT)
• **RICARDO GASPAR, Alexandre Miguel**
3800-783 Eixo (PT)
• **PASCOAL NETO, Carlos de**
3800-783 Eixo (PT)

(56) References cited:
**JP-A- 2020 108 969     JP-A- 2020 108 969**

• **ANDREIA CARLA ET AL: "Sintese e Caracteriza��o de Nanoconp�sitos de Celulose/CaC03", DISSERTATION, 1 January 2008 (2008-01-01) - 1 January 2008 (2008-01-01), XP055906869, Retrieved from the Internet <URL:https://ria.ua.pt/bitstream/10773/3030/1/2008001827.pdf> [retrieved on 20220330]**
• **DELGADO-AGUILAR MARC ET AL: "Bleached Kraft Eucalyptus Fibers as Reinforcement of Poly(Lactic Acid) for the Development of High-Performance Biocomposites", POLYMERS, vol. 10, no. 7, 24 January 2018 (2018-01-24), CH, pages 699, XP055915883, ISSN: 2073-4360, DOI: 10.3390/polym10070699**
• **LENGOWSKI ELAINE C ET AL: "Different degree of fibrillation: strategy to reduce permeability in nanocellulose-starch films", CELLULOSE, vol. 27, no. 18, 16 May 2020 (2020-05-16), pages 10855 - 10872, XP037307914, ISSN: 0969-0239, DOI: 10.1007/S10570-020-03232-4**

EP 4 293 158 B1

- VALENTE BRUNO F. A. ET AL: "Effect of the Micronization of Pulp Fibers on the Properties of Green Composites", vol. 26, no. 18, 15 September 2021 (2021-09-15), DE, pages 5594, XP055915972, ISSN: 1433-1373, Retrieved from the Internet <URL:https://www.ncbi.nlm.nih.gov/pmc/ivip/1420-3049/26/18/5594> DOI: 10.3390/molecules26185594
- SIRACUSA VALENTINA ET AL: "Bio-Polyethylene (Bio-PE), Bio-Polypropylene (Bio-PP) and Bio-Poly(ethylene terephthalate) (Bio-PET): Recent Developments in Bio-Based Polymers Analogous to Petroleum-Derived Ones for Packaging and Engineering Applications", POLYMERS, vol. 12, no. 8, 23 July 2020 (2020-07-23), CH, pages 1641, XP093229894, ISSN: 2073-4360, DOI: 10.3390/polym12081641
- ANDREIA CARLA ET AL: "Sintese e Caracterizaçào de Nanoconpósitos de Celulose/CaC03", DISSERTATION, 1 January 2008 (2008-01-01) - 1 January 2008 (2008-01-01), XP055906869, Retrieved from the Internet <URL:https://ria.ua.pt/bitstream/10773/3030/1/2008001827.pdf> [retrieved on 20220330]
- DELGADO-AGUILAR MARC ET AL: "Bleached Kraft Eucalyptus Fibers as Reinforcement of Poly(Lactic Acid) for the Development of High-Performance Biocomposites", POLYMERS, vol. 10, no. 7, 24 January 2018 (2018-01-24), CH, pages 699, XP055915883, ISSN: 2073-4360, DOI: 10.3390/polym10070699
- LENGOWSKI ELAINE C ET AL: "Different degree of fibrillation: strategy to reduce permeability in nanocellulose-starch films", CELLULOSE, vol. 27, no. 18, 16 May 2020 (2020-05-16), pages 10855 - 10872, XP037307914, ISSN: 0969-0239, DOI: 10.1007/S10570-020-03232-4
- VALENTE BRUNO F. A. ET AL: "Effect of the Micronization of Pulp Fibers on the Properties of Green Composites", MOLECULES, vol. 26, no. 18, 15 September 2021 (2021-09-15), DE, pages 5594, XP055915972, ISSN: 1433-1373, Retrieved from the Internet <URL:https://www.ncbi.nlm.nih.gov/pmc/ivip/1420-3049/26/18/5594> DOI: 10.3390/molecules26185594

(52) Cooperative Patent Classification (CPC): (Cont.)

C-Sets
C08L 67/04, C08L 1/02;
C08L 67/04, C08L 97/02

## Description

### FIELD OF THE INVENTION

The present invention relates to biocomposite materials, more particularly referring to a biocomposite consisting of a bioplastic and micronized fibers of bleached eucalyptus Kraft pulp.

### BACKGROUND OF THE INVENTION

The composites market is still dominated by composites made up of polymeric matrices of non-renewable origin reinforced with synthetic fibers, such as glass fibers. However, due to the growing demand for more ecological and sustainable materials, in recent decades, natural fibers have been used to replace synthetic fibers, mainly due to their renewable and biodegradable nature, but also because of their lower density and lower cost of production.

Additionally, natural fibers do not pose a risk of toxicity during handling, nor are they abrasive to equipment during processing (Pickering KL, Efendy MGA, Le TM. A review of recent developments in natural fibre composites and their mechanical performance. Compos Part A Appl Sci Manuf 2016;83:98-112). Natural fiber composites, also known as biocomposites, are already commercialized for applications in the automotive, furniture, home appliances and electronics industries (Mohammed L, Ansari MNM, Pua G, Jawaid M, Islam MS. A Review on Natural Fiber Reinforced Polymer Composite and Its Applications. Int J Polym Sci 2015:1-15). However, despite the greater sustainability of composites with natural fibers compared to those reinforced with synthetic fibers, the use of matrices derived from fossil resources, such as polypropylene (PP) or polyethylene (PE), still has a negative impact on the environment. Specifically, the non-renewable and non-biodegradable character of these matrices and the impossibility of recycling the composites are disadvantages of this type of materials (La Mantia FP, Morreale M. Green composites: A brief review. Compos Part A Appl Sci Manuf 2011;42(6):579-588). One way to overcome these disadvantages is to replace petrochemical-based matrices with bio-based and biodegradable ones. Of these, poly(lactic acid) (PLA) and poly(3-hydroxybutyrate) (PHB) are part of the restricted group of biopolymers currently commercially available and whose properties are comparable to some of conventional polymers of petrochemical origin. (Misra M, Pandey JK, Mohanty AK. Biocomposites: Design and Mechanical Performance. 1st Edition. Woodhead Publishing 2015; 17-37). Additionally, these bioplastics can also be processed through common technologies industrially implemented (Granda LA, Espinach FX, Tarrés Q, Méndez JA, Delgado-Aguilar M, Mutjé P. Towards a good interphase between bleached kraft softwood fibers and poly(lactic) acid. Compos Part B Eng 2016;99:514-20; Peltola H, Immonen K, Johansson L, Virkajärvi J, Sandquist D. Influence of pulp bleaching and compatibilizer selection on performance of pulp fiber reinforced PLA biocomposites. J Appl Polym Sci 2019:47955).

However, these biocomposites, where both the matrix and the reinforcing fiber are bio-based, still have some of the limitations of biocomposites with petrochemical-based matrices. More specifically, the intrinsic hydrophilicity and high aspect ratio of cellulosic materials often lead to agglomeration and poor dispersion of fibers in hydrophobic polymer matrices (Qiang T, Wang J, Wolcott MP. Facile Preparation of Cellulose/Polylactide Composite Materials with Tunable Mechanical Properties. Polym Plast Technol Eng 2018;57:1288-95), whether they are of petrochemical or of renewable origin. As a consequence, the mechanical performance and visual appearance of composites is inevitably impaired.

Over the years, several strategies have been considered to overcome these disadvantages, including fiber pretreatments such as alkaline treatments (Mazzanti V, Pariante R, Bonanno A, Ruiz de Ballesteros O, Mollica F, Filippone G. Reinforcing mechanisms of natural fibers in green composites: Role of fibers morphology in a PLA/hemp model system. Compos Sci Technol 2019;180:51-9) or surface modifications such as acetylation (Mukherjee T, Sani M, Kao N, Gupta RK, Quazi N, Bhattacharya S. Improved dispersion of cellulose microcrystals in polylactic acid (PLA) based composites applying surface acetylation. Chem Eng Sci 2013;101:655-62). Other compatibilization strategies include the use of compatibilizing agents such as maleic anhydride grafted onto polypropylene, (Yatigala NS, Bajwa DS, Bajwa SG. Compatibilization improves physico-mechanical properties of biodegradable biobased polymer composites. Compos Part A Appl Sci Manuf 2018;107:315-25) or the use of external additives, namely coupling agents (também designados de agentes compatibilizantes) (Anbupalani MS, Venkatachalam CD, Rathanasamy R. Influence of coupling agent on altering the reinforcing efficiency of natural fibre-incorporated polymers - A review. J Reinf Plast Compos 2020;39(13-14):520-544) have also been tested. Another alternative to avoid agglomeration of fibers involves the use of mechanical processes (Niu Z, Chen Y, Feng J. Preparation, structure, and property of wood flour incorporated polypropylene composites prepared by a solid-state mechanochemical method. J Appl Polym Sci 2016;133., Qiang T, Wang J, Wolcott M, Qiang T, Wang J, Wolcott MP. Facile Fabrication of 100% Bio-based and Degradable Ternary Cellulose/PHBV/PLA Composites. Materials 2018;11:330). In these processes, the mechanical treatment reduces the size of the fibers, improving their dispersion without the use of solvents or chemicals.

EP3088600B1 discloses a composite of fine cellulose fibers, where the average fiber size is 0.1 to 20 nm, and which includes a polymer with an ethylene oxide/propylene oxide copolymer fraction or a fraction of propylene oxide polymer, the cellulose fibers being bonded to the polymer through an amide bond. The fine cellulose fibers described in EP3088600B1 are obtained from wood pulp, cotton pulp, and non-woody pulp, such as corn husk and bagasse pulp, subsequently subjected to an oxidation treatment. The described composite has a low amount of aggregates, and characteristics of transparency, heat resistance and mechanical resistance.

Patent application EP3498736A1 discloses a composite of cellulose fibers, with mechanical strength, heat resistance and dimensional stability properties, wherein said cellulose incorporates modifying groups, such as hydrocarbon groups, and an average aspect ratio between 1 and 150. The thermoplastic matrix constituting the composite includes saturated polyester resins such as PLA resins and olefin resins such as polyethylene resins and polypropylene resins. The cellulose fibers described in EP3498736A1 are obtained from hardwood or softwood pulps, later oxidized through, for example, a reaction with the 2,2,6,6-Tetramethylpiperidine-1-oxyl radical (TEMPO). EP2511346B1 discloses a composite material, with mechanical strength properties, that includes cellulose microfibrils with a content of carboxylic groups of 0.1 to 3 mmol/g and a polymeric matrix including polymers derived from biomass and polymers derived from petroleum. The composite is further described by the adsorption of a surfactant onto the cellulose microfibrils, such as a quaternary ammonium compound or primary to tertiary amines. Cellulosic microfibrils are also obtained by the oxidation of natural cellulose fibers, such as softwood and hardwood pulp, cotton pulp, straw and bagasse pulp, in the presence of the oxidizing agent TEMPO.

Delgado-Aguilar et al., Polymers 2018, 10, 699 discloses biocomposites of PLA and 10-30 wt% of bleached kraft eucalyptus pulp

Thus, there is a need to develop new fully biological-based composites that demonstrate high homogeneity and good mechanical properties, which are viable alternatives to petrochemical-based composites, and that do not require the use of solvents or chemicals in the chemical modification of its components, in particular natural fibers.

SUMMARY OF THE INVENTION

The present invention relates to a biocomposite comprising a bioplastic and from 5% to 60% by weight of micronized fibers of bleached eucalyptus Kraft pulp (BEKP). The micronized fibers of bleached eucalyptus Kraft pulp have an aspect ratio between 11.0 and 30.0. The bioplastic is poly(hydroxybutyrate) (PHB).

The present invention also refers to the use of the biocomposite in the automotive, furniture, aerospace, construction, musical instruments, home appliances, electronic components or packaging industries, among others.

BRIEF DESCRIPTION OF THE DRAWINGS

Figure 1: Photographs of PHB and PLA based composites with: A) different Cel355 fiber loads and B) fibers with different aspect ratios.

Figure 2: SEM (Scanning Electron Microscope) micrographs of the fractured surfaces of PHB and PLA-based composites with 10 wt% Cel355.

Figure 3: Tensile modulus of the composites with different loads of Cel355 (A,C) and with fibers with different aspect ratios (B,D). Different letters (a,b,c,d) indicate statistically significant differences ($p < 0.05$).

Figure **4:** Flexural modulus of the composites with different loads of Cel355 (A) and with no-micronized and micronized fibers with different aspect ratios (B). Different letters (a,b,c,d) indicate statistically significant differences ($p < 0.05$).

Figure 5. Impact properties of PHB and PLA-based composites reinforced with different loads of Cel355 (a) and reinforced with no-micronized and micronized fibers with different aspect ratios (b). Different letters (a,b,c,d) indicate statistically significant differences ($p < 0.05$).

Figure 6: Water-uptake capacity as function of time for PHB and PLA-based composites reinforced with different loads of Cel355.

Figure 7: Water-uptake capacity as function of time for PHB and PLA-based composites with no-micronized and micronized with different aspect ratios.

Figure 8: Melt flow rate of PHB and PLA-based composites with different loads of Cel355 (A,C) and with no-micronized and micronized fibers with different aspect ratios (B,D).

DETAILED DESCRIPTION OF THE INVENTION

The present invention relates to a biocomposite consisting of a bioplastic and micronized fibers of bleached eucalyptus Kraft pulp, as described in this patent application and claim 1, which have a fully biological basis, renewable character and biodegradability, and simultaneously good fiber dispersion, homogeneity and increased tensile strengths, tensile modulus and flexure, compared to composites with non-micronized fibers. The biocomposite described in this patent application shows to be a simple and sustainable alternative to composites with petrochemical-based components with application in the automotive, furniture, aerospace, construction, musical instruments, home appliances, electronic components, packaging industries, among others.

A bioplastic refers to plastics derived from biomass sources such as, but not limited to, poly(lactic acid) and poly(hydroxybutyrate).

Kraft refers to Kraft cooking or sulfate cooking. It is a chemical process that consists of cooking wood in a cooking liquor usually consisting of sodium hydroxide and sodium sulfide, at temperatures of 140 to 180 °C, in pressurized reactors.

Bleached Kraft pulp refers to a pulp produced through the Kraft process and which is further subjected to a bleaching step. The bleaching step is intended to continue the delignification of the wood, which occurs during cooking, by the action of oxidizing agents, such as oxygen, chlorine dioxide and hydrogen peroxide.

Micronization refers to a mechanical treatment to reduce the length and width of fibers to the micrometer range. It can be carried out by processes such as, but not limited to, grinding by the action of knives, by the effect of the action of balls or by the effect of shearing methods.

Fiber aspect ratio refers to the ratio between the length and width of the fibers.

The present invention relates to a biocomposite comprising a bioplastic and micronized fibers of bleached eucalyptus Kraft pulp in a percentage of 5% to 60 % by weight. The fibers have an aspect ratio between 11.0 and 30.0.

## **Examples**

Example 1

Materials

Two distinct commercial pellet samples of PHB: P209E, Melt Flow Rate (MFR) of 10 g.10 min$^{-1}$ (180°C, 2.16 kg) and P226, MFR of 10 g.10 min$^{-1}$ (180°C, 5 kg) were considered. Two samples of commercial PLA pellets, Ingeo Biopolymer 3D860 and 3100HP with melt flow rate of 5-7 g.10 min$^{-1}$ (210°C, 2,16 kg) and 24 g.10 min$^{-1}$ (210°C/2,16 kg), respectively, were considered. Eucalyptus bleached Kraft pulp (BEKP) with a crystallinity index (CI) of 70.1% and with the micronized fibers (Cel60, Cel200, Cel355 and Cel500) obtained from the BEKP (Table 1) was considered.

The CI of all celluloses samples was calculated according to the peak height method in a Phillips X'pert MPD diffractometer (PANalytical, Netherlands) using CuKα radiation (λ=1.541 Å) with a scan rate of 0.05° s-1 [12].

Table 1: Average lengths, widths and crystallinity indexes of the used fibers.

| Samples | Lemgth (μm) | Width (μm) | Aspect ratio | Crystallinity index (%) |
|---------|-------------|------------|--------------|-------------------------|
| Cel60   | 149         | 13,5       | 11,0         | 54,1                    |
| Cel200  | 257         | 14,9       | 17,2         | 65,4                    |
| Cel355  | 332         | 12,5       | 26,6         | 64,6                    |
| Cel500  | 405         | 14,0       | 28,9         | 68,4                    |

Compounding and processing of the biocomposites

A micronized cellulose (Cel355) was used as reinforcement of the four bioplastic matrices in percentages from 10 to 40 wt %.

The four thermoplastic matrices were compounded with the four micronized pulp fibers and with the non-treated BEKP for a fixed reinforcement load of 40 wt%.

All composites were prepared by melt-mixing procedure using a Brabender W 30 EHT Plastograph EC mixer (Brabender, Germany). The materials were mixed at 180°C for PLA 3100HP and at 170 °C for the remaining polymers during 15 minutes at speed of 50 rpm. The specimens for mechanical and water-uptake assays were prepared by injection moulding in a Thermo Scientific Haake Minijet II (Thermo Scientific, USA).

Characterization

Scanning electron microscopy (SEM) analyses were conducted using a FE-SEM Hitachi SU70-47 microscope (Hitachi High-Technologies Corporation, Tokyo, Japan) operated at 15.0 kV. The samples were coated with a carbon film prior to the analysis.

Tensile and flexural assays were performed according to ISO-527-2 on a universal testing machine Instron 5564 (Instron Corporation, USA) with a cross-head velocity of 5 mm.min-1 using a 10 kN static load cell. The flexural modulus was determined in the three-point bend model according to ISO 178, at a velocity of 5 mm.min-1 and using a 500 N static load cell. Five specimens were tested with a span length of 64 mm. The unnotched charpy (edgewise) impact strength was measured on a Ray Ran Universal Pendulum impact system (Ray-Ran Test Equipment Ltd., United Kingdom) operating a pendulum of 4 J (ISO 179/1eU). Ten specimens were tested for each sample and the average values were calculated.

Statistical analysis of mechanical properties was performed by analysis of variance (ANOVA) and the Tukey mean comparison test (OriginPro, 9.6.5, OriginLab Corporation, Northampton, MA, USA), with a significance level of $p < 0.05$.

Water uptake assays were conducted by immersing the composite specimens in distilled water for 31 days at room temperature. The weight of the composite was periodically assessed after removing the excess water with tissue paper. The water uptake (%) at time t was calculated as shown in Equation 1:

$$Water\ uptake\ (\%) = \frac{(W_t - W_0)}{W_0} \times 100\ (1),$$

where $W_0$ is the specimen's initial weight and $W_t$ is the weight of the specimens after immersion time. Three replicates were used and the mean and standard deviation calculated.

The melt flow rate was evaluated according to ASTM D1238 standard, using a Melt Flow Indexer Davenport (MFR-9) (Ametek, Denmark) operated at 175 °C for composites with PHB and 190 °C for composites with PLA. At least 5 cut-offs for each sample were weighted and the melt flow rate was calculated as follows:

$$MFR\ (g.\,10\ min^{-1}) = \frac{600 \times m}{t}\ (2),$$

where m is the average weight of the cut-offs, in grams, and t is the cut-off time interval, in seconds.

Morphology

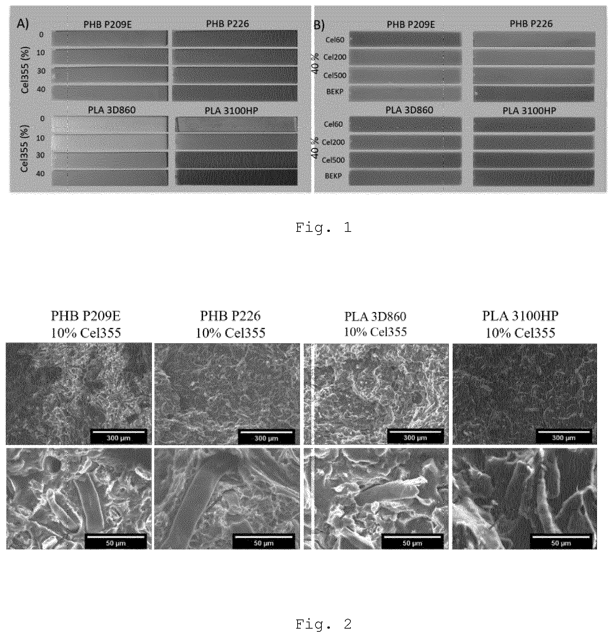

On the macroscopic morphology analysis of the composites reinforced with different loads of Cel355 (Fig. 1A) and in the composites with 40 wt % of BEKP micronized fibers with different aspect ratios (Fig. 1b), no visible agglomerates or bundles can be seen, which indicated a good dispersion of the fibers in the different matrices.

The SEM micrographs of the break zones of the composites shown in Fig. 2 also revealed a good dispersion of the micronized BEKP pulp fibers in the matrices, which is in agreement with the visual observation of the samples (Fig. 1). These results were indicative of the good dispersion of micronized BEKP pulp fibers in the different PLA and PHB matrices.

Mechanical properties

Tensile properties

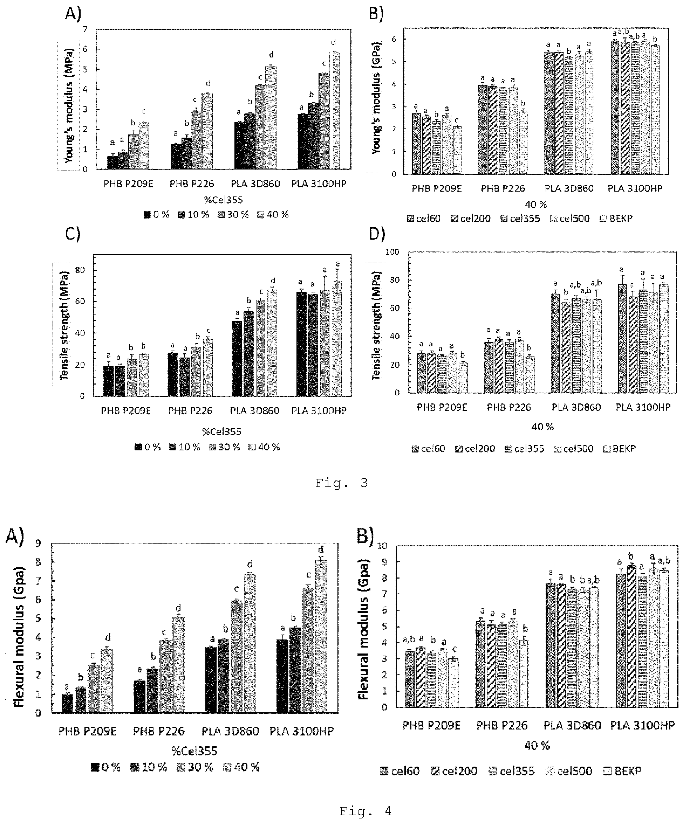

The Young's modulus and tensile strength of the matrices and composites prepared in this work are shown in Fig. 3. As observed, the increment in the fiber's load leads to an increase in tensile modulus. The Young's modulus of the composites reinforced with 40 wt.% Cel355 increased 3.7, 3.1, 2.2 and 2.1 times compared to the respective matrices (PHB P209E, PHB P226, PLA 3D860 and PLA 3100HP). Regarding the influence of the fiber's aspect ratio, it was observed that changes in aspect ratio had little impact on the Young's modulus. Nonetheless, it is important to note that PHB-based composites reinforced with micronized fibers have better tensile properties than those with the non-treated BEKP. Contrary to some studies, where the increase in the fiber load leads to a decrease in the tensile strength, the results from the present study reveal that the incorporation of micronized fibers also had a positive influence in this parameter. For composites with 40 wt.% Cel355, an improvement on the tensile strength of 39%, 30% ,42% and 10% was seen in comparison with the corresponding matrices. On the other hand, and similarly to the results of the Young's modulus, the variation of the aspect ratio did not change significantly the tensile strength of the composites. PHB-based composites with micronized fibers had, once again, superior properties in comparison with the non-treated BEKP.

Flexural properties

The flexural modulus obtained from the three-point bend tests performed on the composites are presented in Fig. 4. The values of the flexural modulus follow the same trend as the Young's modulus previously described, i.e., the increase in the reinforcing load of Cel355 leads to an increase in the flexural modulus of the composites. The superior flexural modulus of composites of PHB with micronized BEKP, compared those with the non-micronized ones, are also in agreement with the data obtained for the Young's modulus. Composites with fibers with different aspect ratios have similar flexural modulus.

Impact properties

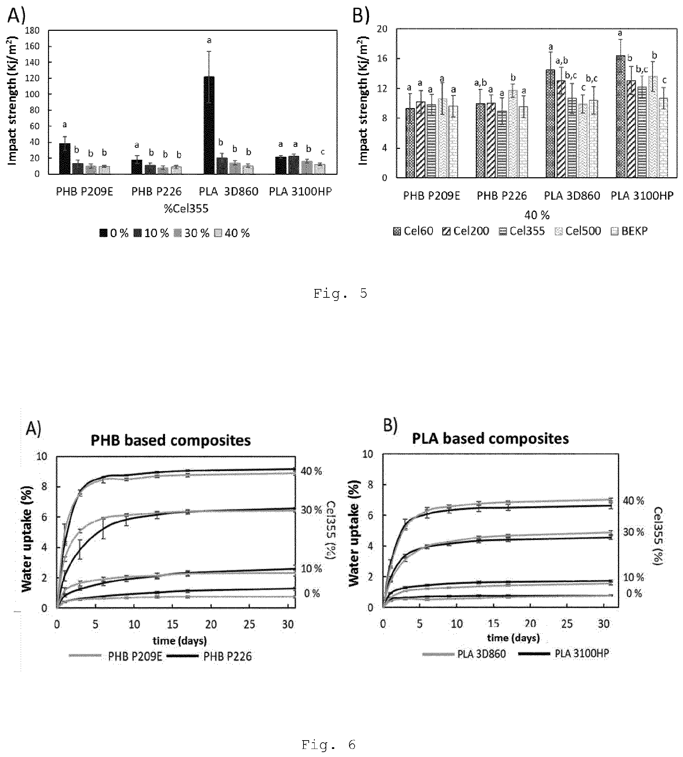

As depicted in Figure 5a, the incorporation of micronized fibers reduced the composites impact strength. The most noted decrease was for the incorporation of 10 wt% of Cel355. For higher cellulose percentages, only a small decrease was noted. Regarding the effect of the aspect ratio, the impact strength remains unchanged in composites with PHB. For the PLA-based composites, smaller aspect ratios favor the increase in the impact strength.

Water uptake capacity

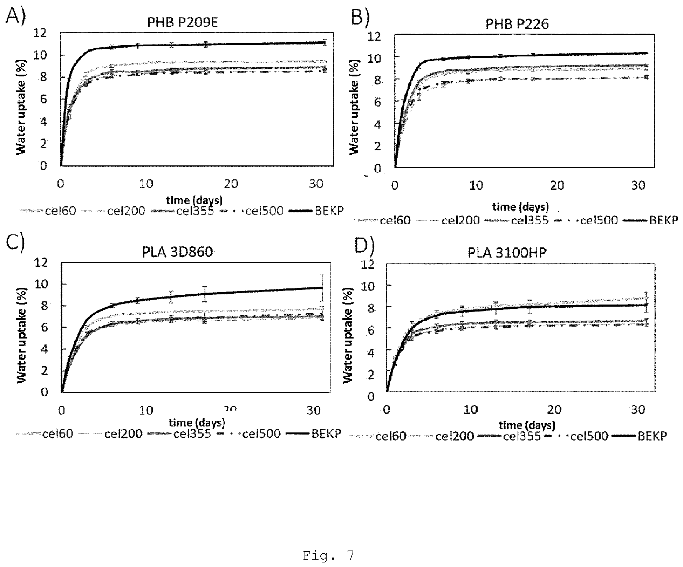

Giving their hydrophobic character, the PLA and PHB matrices have water uptakes under 1.3% after 31 days of immersion. On the other hand, since cellulose is hydrophilic, the increase in the fiber's load leads to higher water uptakes by the composites. As seen in Figure 6, the water uptake follows the same pattern for all composites: a fast increase during the first days of immersion and stabilization after reaching an equilibrium.
Among the composites with micronized fibers, the ones reinforced with the smallest aspect ratios (Cel60), have, for most cases, the highest water uptakes (Figure 7).
Composites with BEKP have, for the most part, higher water uptake values than composites with non-micronized fibers. It should be noted that PHBs composites showed higher water uptake values than PLAs composites.
Composites reinforced with micronized BEKP pulp fibers showed a clear advantage over those that incorporated non-micronized BEKP pulp (Figure 7). Composites with BEKP not only showed higher water absorption values (up to 11,1 $\pm$ 0,2%), as well as higher water uptake rates during the first days, especially for composites with PHBs. The positive effect of the incorporation of micronized fibers of BEKP pulp on the water uptake of the composites is in agreement with the results of the tensile and flexural modulus, which supports the idea that micronized fibers of BEKP pulp favor their incorporation into the matrix, preventing water from easily penetrating the composite. Regarding the aspect ratio of micronized BEKP pulp fibers, with the exception of PLA 3100HP-based composites, all composites with different micronized BEKP pulp fibers showed similar water absorption values.

Melt flow rate

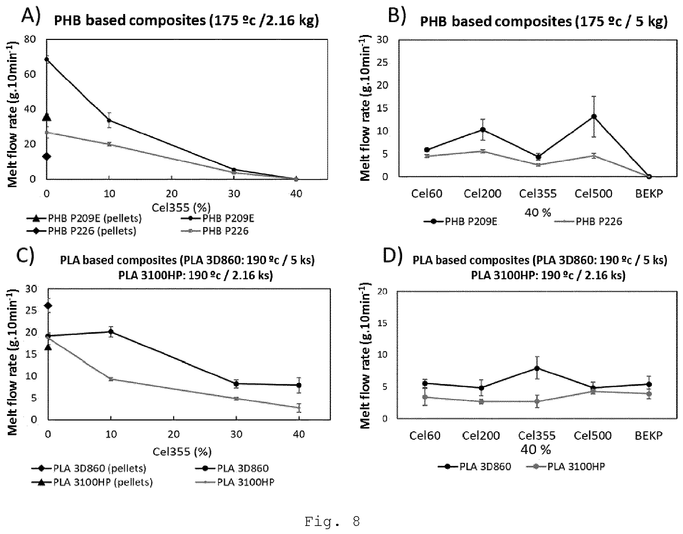

As seen in Fig. 8, the incorporation of micronized fibers in the bio-based matrices gradually decreases the MFR. The incorporation of fibers had a more pronounced effect on PHB-based composites, where the decrease was more pronounced. On the opposite to the effect of the fiber load, the aspect ratio of the fibers did not had any significant influence on the MFR. However, unlike composites with non-micronized fibers, PHBs composites with BEKP did not flow. This observation confirms that the incorporation of micronized fibers of BEKP paste improves the fluidity of composites, especially those based on PHB.
PLA and PHB biocomposites with micronized BEKP pulp fibers were thus successfully produced. Composites with micronized fibers of BEKP paste showed good dispersion and homogeneity with regard to macroscopic and microscopic morphology. The incorporation of micronized fibers of BEKP pulp also allowed reducing the water uptake of the composites, improve their mechanical properties of traction and bending, and to increase their melt flow rate, especially those based on PHB.

Example 2

Micronized fibers of bleached eucalyptus Kraft pulp reinforcement loads were also incorporated into the bioplastic matrices in percentages of 5%, 50% and 60%, according to the procedure described in example 1, and their properties, such as morphology, mechanical properties, impact properties, water uptake capacity and melt flow rate were observed with increased results and in line with what was observed in the previous example.

**Claims**

1. Biocomposite comprising poly(hydroxybutyrate) and from 5% to 60% by weight of bleached eucalyptus Kraft pulp micronized fibers and wherein the bleached eucalyptus Kraft pulp micronized fibers have an aspect ratio of 11.0 to 30.0 determined as specified in the description.

2. Use of a biocomposite as claimed in claim 1 for use in the automotive, furniture, aerospace, construction, musical instruments, home appliances, electronic components and packaging industries.

**Patentansprüche**

1. Biokomposit umfassend Poly(hydroxybutyrat) und von 5 Gew.-% bis 60 Gew.-% mikronisierte Fasern aus gebleichtem Eukalyptus-Kraftzellstoff, wobei die mikronisierten Fasern aus gebleichtem Eukalyptus-Kraftzellstoff ein Aspektverhältnis von 11,0 bis 30,0 aufweisen, bestimmt wie in der Beschreibung angegeben.

2. Verwendung eines Biokomposits nach Anspruch 1 in der Automobil-, Möbel-, Luft- und Raumfahrt-, Bau-, Musikinstrumenten-, Haushaltsgeräte-, Elektronikkomponenten- und Verpackungsindustrie.

**Revendications**

1. Biocomposite comprenant du poly(hydroxybutyrate) et de 5 % à 60 % en poids de fibres micronisées de pâte Kraft d'eucalyptus blanchie, les fibres micronisées de pâte Kraft d'eucalyptus blanchie ayant un rapport d'aspect de 11,0 à 30,0, déterminé comme spécifié dans la description.

2. Utilisation d'un biocomposite selon la revendication 1 dans les industries automobile, du meuble, aérospatiale, de la construction, des instruments de musique, des appareils électroménagers, des composants électroniques et de l'emballage.

Fig. 1

Fig. 2

Fig. 3

Fig. 4

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3088600 B1
- EP 3498736 A1
- EP 2511346 B1

### Non-patent literature cited in the description

- *Compos Part A Appl Sci Manuf*, 2016, vol. 83, 98-112
- **MOHAMMED L** ; **ANSARI MNM** ; **PUA G** ; **JAWAID M** ; **ISLAM MS**. A Review on Natural Fiber Reinforced Polymer Composite and Its Applications.. *Int J Polym Sci*, 2015, 1-15
- **LA MANTIA FP** ; **MORREALE M.** Green composites: A brief review.. *Compos Part A Appl Sci Manuf*, 2011, vol. 42 (6), 579-588
- **MISRA M** ; **PANDEY JK** ; **MOHANTY AK.** Biocomposites: Design and Mechanical Performance.. Woodhead Publishing, 2015, 17-37
- **GRANDA LA** ; **ESPINACH FX** ; **TARRÉS Q** ; **MÉNDEZ JA** ; **DELGADO-AGUILAR M** ; **MUTJÉ P.** Towards a good interphase between bleached kraft softwood fibers and poly(lactic) acid.. *Compos Part B Eng*, 2016, vol. 99, 514-20
- **PELTOLA H** ; **IMMONEN K** ; **JOHANSSON L** ; **VIRKAJÄRVI J** ; **SANDQUIST D.** Influence of pulp bleaching and compatibilizer selection on performance of pulp fiber reinforced PLA biocomposites.. *J Appl Polym Sci*, 2019, 47955
- **QIANG T** ; **WANG J** ; **WOLCOTT MP.** Facile Preparation of Cellulose/Polylactide Composite Materials with Tunable Mechanical Properties.. *Polym Plast Technol Eng*, 2018, vol. 57, 1288-95
- **MAZZANTI V** ; **PARIANTE R** ; **BONANNO A** ; **RUIZ DE BALLESTEROS O** ; **MOLLICA F** ; **FILIPPONE G**. Reinforcing mechanisms of natural fibers in green composites: Role of fibers morphology in a PLA/hemp model system.. *Compos Sci Technol*, 2019, vol. 180, 51-9
- **MUKHERJEE T** ; **SANI M** ; **KAO N** ; **GUPTA RK** ; **QUAZI N** ; **BHATTACHARYA S.** Improved dispersion of cellulose microcrystals in polylactic acid (PLA) based composites applying surface acetylation.. *Chem Eng Sci*, 2013, vol. 101, 655-62
- **YATIGALA NS** ; **BAJWA DS** ; **BAJWA SG**. Compatibilization improves physico-mechanical properties of biodegradable biobased polymer composites.. *Compos Part A Appl Sci Manuf*, 2018, vol. 107, 315-25
- **ANBUPALANI MS** ; **VENKATACHALAM CD** ; **RATHANASAMY R.** Influence of coupling agent on altering the reinforcing efficiency of natural fibre-incorporated polymers - A review.. *J Reinf Plast Compos*, 2020, vol. 39 (13-14), 520-544
- **NIU Z** ; **CHEN Y** ; **FENG J.** Preparation, structure, and property of wood flour incorporated polypropylene composites prepared by a solid-state mechanochemical method.. *J Appl Polym Sci*, 2016, vol. 133
- **QIANG T** ; **WANG J** ; **WOLCOTT M** ; **QIANG T** ; **WANG J** ; **WOLCOTT MP.** Facile Fabrication of 100% Bio-based and Degradable Ternary Cellulose/PHBV/PLA Composites.. *Materials*, 2018, vol. 11, 330
- **DELGADO-AGUILAR et al.** *Polymers*, 2018, vol. 10, 699